# EUROPÄISCHE PATENTSCHRIFT

(11) **EP 1 614 571 B1**
(45) Veröffentlichungstag und Bekanntmachung des Hinweises auf die Patenterteilung: **27.08.2008**
(21) Anmeldenummer: 05014762.8
(22) Anmeldetag: 07.07.2005
(51) Int. Cl.: B60J 7/14

(54) **Klappvorrichtung zum Öffnen und Schliessen der Dachöffnung eines Fahrzeuges, entsprechende Dach und Kraftfahrzeug**
Folding device to open and close a roof opening in a vehicle, corresponding roof and vehicle
Dispositif pliant pour ouvrir et fermer une ouverture dans le toit d'un véhicule, toit et véhicule correspondantes

(30) Priorität: 07.07.2004 DE 102004032809
(43) Veröffentlichungstag der Anmeldung: 11.01.2006
(73) Patentinhaber: GM Global Technology Operations, Inc., Detroit, MI 48265-3000 (US)
(72) Erfinder: Blobel, Andreas, 65468 Trebur-Geinsheim (DE)
(74) Vertreter: Strauss, Peter

(56) Entgegenhaltungen:
- EP-A- 1 241 034
- DE-A1- 19 962 070
- US-A- 5 746 470
- US-A1- 2002 125 743
- US-A1- 2002 185 886

## Beschreibung

Die vorliegende Erfindung betrifft eine, Klappvorrichtung für ein Kraftfahrzeugdach gemäß dem Anspruch 1, ein Kraftfahrzeugdach gemäß dem Anspruch 2, sowie ein Kraftfahrzeug gemäß dem Anspruch 4. Eine klappvorrichtung für ein öffnungsfähiges Fahrzeugdach ist z*.*B, aus der US 2002/0185886 A bekannt*.*

Aus der Praxis sind Kraftfahrzeuge mit Dachöffnungen bekannt, deren Dachöffnungen durch ein Dachelement oder - insbesondere bei größeren Dachöffnungen - durch mehrere Dachelemente verschlossen werden können. Zum Öffnen bzw. Freigeben der Dachöffnung ist jeweils ein entsprechender Mechanismus bzw. eine entsprechende Kinematik vorgesehen. Insbesondere bei größeren Dachöffnungen und mehr als nur einem Dachelement hat es sich als vorteilhaft erwiesen, die Dachkinematik als Klappvorrichtung auszugestalten.

Insbesondere beim vollständigen Aufklappen der Dachelemente zum Öffnen der Dachöffnung kommt üblicherweise jeweils eine Unterseite eines Dachelements mit der Unterseite eines benachbarten Dachelements miteinander in Kontakt, oder aber jeweils deren Oberseiten. Da der für den Klappvorgang zwischen zwei benachbarten Dachelementen jeweils benötigte Scharnier- bzw. Drehpunkt im Bereich der Stirnseiten der je weils benachbarten Dachelemente liegt, ist aufgrund der Überschneidung beider Dachelemente im letzten Abschnitt der Klappbewegung ein vollständiges aneinander Anliegen der Unterseiten oder Oberseiten der aufeinander zugeklappten Dachelemente ohne deren Schädigung jedoch nicht möglich. Ein enges, platzsparendes "Stapeln" der Dachelemente aufeinander beim Aufklappen ist daher nicht möglich, wenn ihr Dreh- bzw. Scharnierpunkt zwischen beiden Dachelementen liegt.

Dieses Problem ließe sich beispielsweise durch einen ausreichend ober- oder unterhalb der Stirnseiten zweier benachbarter Dachelemente liegenden Drehpunkt vermeiden. Ein solcher Dreh- bzw. Scharnierpunkt müsste damit jedoch auch ober- bzw. unterhalb liegen und wäre somit außerhalb der eigentlichen Dachfläche auf dem Fahrzeugdach oder unter dem Fahrzeugdach im Bereich des Fahrzeughimmels sichtbar. Beide Positionen sind jedoch nachteilig und damit nicht erwünscht.

Aufgabe der vorliegenden Erfindung ist es daher, eine Klappvorrichtung für ein Kraftfahrzeugdach zum Öffnen und Freigeben einer Dachöffnung vorzuschlagen, mittels welcher Dachelemente, welche die Dachöffnung verschließen, zum Freigeben der Dachöffnung aufklappbar sind, wobei eine oben beschriebene Überschneidung der Dachelemente ohne außerhalb der Fahrzeugdachebene liegender Scharnierpunkte möglich ist. Es ist ferner ein Ziel der vorliegenden Erfindung, ein mit einer erfindungsgemäßen Klapp - vorrichtung ausgestaltetes Kraftfahrzeugdach und/oder Kraftfahrzeug anzugeben.

Die erfindungsgemäße Aufgabe wird durch eine Klappvorrichtung für ein Kraftfahrzeugdach gemäß dem Anspruch 1, ein Fahrzeugdach gemäß dem Anspruch 2 sowie durch ein Kraftfahrzeug gemäß dem Anspruch 4 gelöst.

Die vorliegende Erfindung schlägt eine Klappvorrichtung für ein Kraftfahrzeugdach vor, wobei das Kraftfahrzeugdach eine Dachöffnung und wenigstens zwei auf- bzw. zuklappbare Dachelemente zum Öffnen oder zum Schließen der Dachöffnung aufweist. Mit der erfindungsgemäßen Klappvorrichtung sind die Dachelemente betätigbar. Das im hinteren Fahrzeug-dachabschnitt angeordnete Dachelement ist um einen bezogen auf das Kraftfahrzeugdach oder auf das Kraftfahrzeug ortsfesten ersten Drehpunkt drehbar gelagert. Die Klappvorrich-tung weist eine Schubstange auf, die im Bereich eines ersten Endes hiervon um einen bezogen auf das Kraftfahrzeug bzw. dessen Kraftfahrzeugdach ortsfesten zweiten Drehpunkt drehbar lagerbar ist. Die Klappvorrichtung weist ferner einen Umlenkhebel auf, welcher drehbar an einem zweiten, dem ersten Ende gegenüberliegenden Ende der Schubstange befestigt ist, und welcher zudem drehbar an einem vorderen Abschnitt des hinteren Dachelements befestigbar ist.

Zwei Verbindungshebel, welche jeweils mit einem ihrer Enden drehbar und doch ortsfest am ersten bzw. vorderen Dachelement befestigbar sind, gehören ebenso zur Klappvorrichtung wie ein Führungshebel, der mit einem ersten Ende hiervon drehbar am zweiten bzw. hinteren Dachelement befestigbar ist. Zum Ausstellen des ersten bzw. vorderen Dachelements bezogen auf das zweite bzw. hintere Dachelement während des Drehens des zweiten bzw. hinteren Dachelements um seinen dachfesten Drehpunkt ist der Umlenkhebel zusätzlich drehbar an beiden Verbindungshebeln befestigt. Der Führungshebel ist hingegen nur an einem der beiden Verbindungshebel und ebenfalls auf drehbare Weise befestigt.

In einer alternativen Anordnung kann der Führungshebel jedoch drehbar mit beiden Verbindungshebeln, der Umlenkhebel hingegen nur an einem Verbindungshebel und ebenfalls drehbar befestigt sein.

Der Vorteil der erfindungsgemäßen Klappvorrichtung für ein Kraftfahrzeugdach liegt darin, dass das vordere bzw. erste und das hintere bzw. zweite Dachelement aufeinander zu geklappt werden können, wobei, da der theoretische Drehpunkt aufgrund der erfindungsgemäßen Klappvorrichtung außerhalb jener Ebene liegt, welche die beiden Dachelemente im geschlossenen Zustand der Dachöffnung bilden, eine Überschneidung der beiden Dachelemente insbesondere beim Aufklappvorgang vermieden wird. Eine Beschädigung der Dachelemente wird daher vorteilhaft verhindert. Da eine Überschneidung ausgeschlossen ist, können die Dachelemente ferner vorteilhaft dicht aufeinander "gestapelt" werden. Die hierzu verwendete Kinematik ist dabei derart ausgestaltet, dass im geschlossenen Zustand der Dachöffnung keine Scharnier- bzw. Drehpunkte der Dachelemente sichtbar sind.

Vorteilhafte Weiterbildungen des erfinderischen Gegenstandes sind jeweils Gegenstand der Unteransprüche.

Die vorliegende Erfindung schlägt ferner ein Kraftfahrzeugdach vor, welches die erfindungsgemäße Klappvorrichtung aufweist.

Hinsichtlich der damit verbundenen Vorteile wird auf die oben bereits beschriebenen Vorteile verwiesen. Diese können mit dem erfindungsgemäßen Kraftfahrzeugdach in synergetischer Weise ungeschmälert erzielt werden.

So weist das Kraftfahrzeugdach in einer bevorzugten Ausführungsform mehr als zwei Dachelemente zum Schließen der Dachöffnung auf. Um dennoch eine vollständige Aufklappbarkeit aller Dachelemente zu gewährleisten, ist nur eines der Dachelemente um einen bezogen auf das Kraftfahrzeug bzw. das Kraftfahrzeugdach ortsfesten Drehpunkt wie oben beschrieben drehbar gelagert. Sollen die aufklappbaren Dachelemente bspw. in Richtung auf einen hinteren Abschnitt des Kraftfahrzeugdachs aufgeklappt werden, ist nur das hinterste Dachelement ortsfest am Kraftfahrzeug drehbar gelagert. Das vorletzte und alle weiter in Richtung eines vorderen Fahrzeugdachabschnitts liegenden Dachelemente sind jeweils mittels bspw. einer oben beschriebenen Klappvorrichtung an dem in Fahrtrichtung hinter ihnen gelegenen Dachelement drehbar befestigt.

Die Vorteile dieser Ausführungsform entsprechen im wesentlichen den oben bereits diskutierten Vorteilen. Auch hier ist ein überschneidungsfreies Umklappen der einzelnen Dachelemente vorteilhaft möglich, was insbesondere bei einer höheren Anzahl vorhandener Dachelemente von Vorteil ist, da das überschneidungsfreie Aufeinanderklappen ein äußerst platzsparendes "Stapeln" bzw. Zusammenführen der Dachelemente ermöglicht. Aufgrund der zwischen den einzelnen Dachelementen gegebenenfalls auch in alternierenden Klapprichtungen angeordneten Klappvorrichtungen sind wiederum vorteilhaft keine Scharniere bzw. Drehpunkte im geschlossenen Zustand der Dachöffnung zu sehen.

Die vorliegende Erfindung schlägt ferner ein Kraftfahrzeug vor, welches mit einer oben diskutierten Klappvorrichtung und/oder einem oben diskutierten Kraftfahrzeugdach ausgestattet ist. Alle oben bereits diskutierten Vorteile sind mit dem erfindungsgemäßen Kraftfahrzeug ungeschmälert erzielbar. Auf die oben stehende Diskussion der mit dem erfindungsgemäßen Kraftfahrzeug erzielbaren Vorteile wird daher ausdrücklich verwiesen.

Die vorliegende Erfindung wird im Folgenden zum besseren Verständnis anhand eines exemplarischen Ausführungsbeispiels mit Bezug auf die beigefügte Zeichnung detailliert erläutert. In der Zeichnung bezeichnen gleiche Bezugszeichen jeweils dieselben bzw. gleichen Bauteile. In der Zeichnung gilt:
- Fig. 1: zeigt eine erfindungsgemäße Klappvorrichtung für ein Kraftfahrzeugdach zusammen mit zwei Dachelementen in vier exemplarischen Klapppositionen A bis D in einer ersten Ausführungsform; und
- Fig. 2: zeigt eine zweite Ausführungsform der erfindungsgemäßen Klappvorrichtung in der aus Fig. 1 bekannten Ansicht.

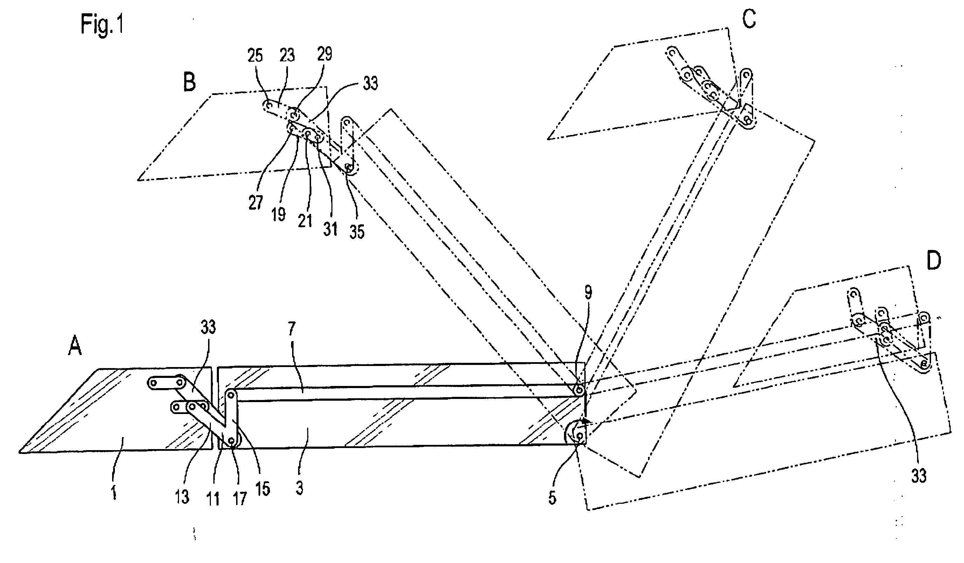

Fig. 1 zeigt eine erfindungsgemäße Klappvorrichtung sowie ein vorderes Dachelement 1 und ein hinteres Dachelement 3. Das hintere Dachelement 3 ist um einen fahrzeugseitig festen Drehpunkt 5 drehbar bzw. schwenkbar gelagert. Eine im wesentlichen parallel zum hinteren Dachelement 3 verlaufende Schubstange 7 ist um einen weiteren kraftfahrzeugfesten Drehpunkt 9 drehbar gelagert. Der Abstand der beiden Drehpunkte 5 und 9 ist maßgeblich entscheidend für die Gewährleistung eines überschneidungsfreien Zusammenklappens der beiden Dachelemente 1 und 3 und kann in Abhängigkeit der jeweiligen konstruktiven Gegebenheiten festgelegt werden.

Das dem im Drehpunkt 9 drehbar gelagerten Ende der Schubstange 7 gegenüber liegende Ende der Schubstange 7 ist wiederum drehbar an einem in der vorliegenden Ausführungsform V-förmig ausgestalteten Umlenkhebel 11 befestigt, wobei die V-Form rein exemplarischer Natur ist und auch jede andere Form für den Umlenkhebel 11 gewählt werden kann, welche die hierin beschriebene Funktion des Umlenkhebels 11 gewährleistet.

Der in Fig. 1 V-förmig dargestellte Umlenkhebel 11 weist zwei Arme 13 und 15 auf und ist im Verbindungsbereich der beiden Arme 13 und 15 in einem Drehpunkt 17 mit dem hinteren Dachteil 3 drehbar befestigt. Das dem vorderen Dachelement 1 zugewandte Ende des Arms 13 des Umlenkhebels 11 ist an einem Verbindungshebel 19 drehbar befestigt, wobei ein Verbindungspunkt 21 des Arms 13 mit dem Verbindungshebel 19 in einem mittleren Abschnitt des Verbindungshebels 19 liegt. Der Verbindungshebel 19 ist ebenso wie ein weiterer Verbindungshebel 23 jeweils drehbar am vorderen Dachelement 1 mittels zweier Drehverbindungen 25 und 27 derart drehbar befestigt, dass die beiden Verbindungshebel 19 und 23 jeweils um die Drehverbindungen 25 und 27 drehen können. Die jeweils den Drehverbindungen 25 und 27 gegenüberliegenden Endabschnitte der Verbindungshebel 19 und 23 sind mittels weiterer Drehverbindungen 29 und 31 an einem Führungshebel 33 jeweils drehbar befestigt. Der Führungshebel 33 ist zudem an seinem der Drehverbindung 29 entgegengesetzten Endabschnitt mittels einer Drehverbindung 35 drehbar am hinteren Dachelement 3 befestigt.

Den vier in Fig. 1 dargestellten Zwischenstellungen A bis D der Dachelemente 1 und 3 während deren Aufklappen im Uhrzeigersinn ist die Bewegung der einzelnen Bauteile zu entnehmen. Zu Beginn der Drehung des Dachelements 3 gibt die Klappvorrichtung aufgrund der oben erläuterten kinematischen Wechselwirkungen der drehbar gelagerten Komponenten die Stellung des ersten Dachelements 1 bezogen auf das zweite Dachelement 3 eindeutig vor.

Von Bedeutung bei der relativen Bewegung des ersten Dachelements 1 bezogen auf das zweite Dachelement 3 ist, dass - nicht nur - in den beliebig gewählten Zwischenstellungen A bis D jeweils unterer, rechter Eckabschnitt nicht mit dem in der Zwischenstellung A links unten gelegenen Eckabschnitt des zweiten Dachelements 3 in Kontakt kommt. Eine Schädigung des ersten oder zweiten Dachelements durch Kontakt mit jeweils dem anderen Dachelement ist daher aufgrund der speziellen Führung der Dachelemente mittels der erfindungsgemäßen Klappvorrichtung ausgeschlossen, welche ein Überschneiden der beiden genannten Eckbereiche wirksam verhindert.

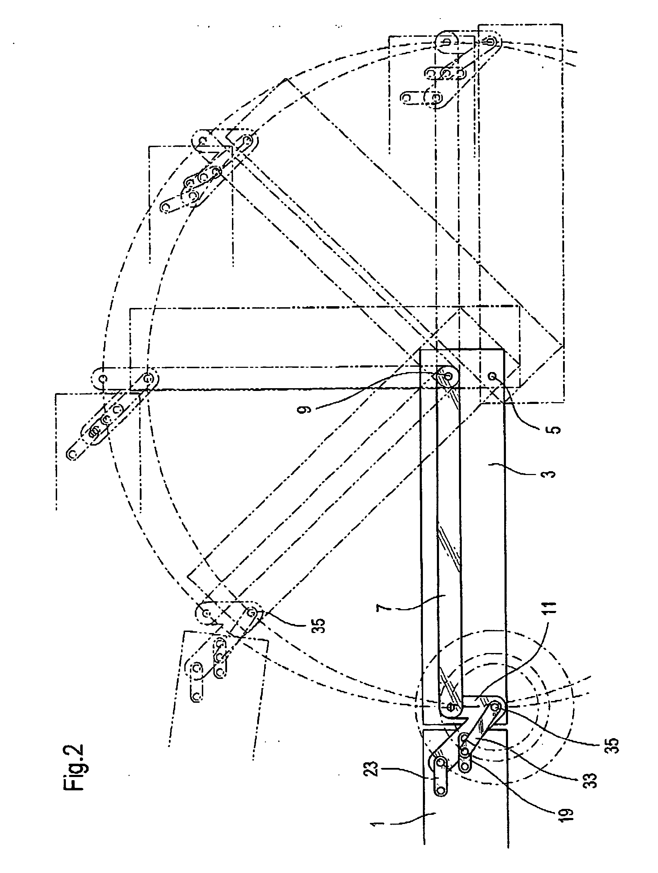

Die in Fig. 1 dargestellte Funktion kann auch mit einer alternativen, in Fig. 2 dargestellten Ausführungsform erzielt werden, bei welcher der Umlenkhebel 11 an beiden Verbindungshebeln 19 und 23 drehbar befestigt ist, der Führungshebels 33 hingegen nur an einem der beiden Verbindungshebeln 19 oder 23.

Die vorliegende Erfindung schlägt somit ein Kraftfahrzeugdach mit einer Dachöffnung und einer Klappvorrichtung zum Freigeben und Schließen der Dachöffnung mittels wenigstens zweier Dachelemente vor. Die Dachelemente sind mittels der Klappvorrichtung derart auf- und zuklappbar, dass ein überschneidungsfreier Klappvorgang der Dachelemente ohne deren Beschädigung möglich ist. Ferner wird eine entsprechende Klappvorrichtung und ein mit einer solchen und/ oder einem erfindungsgemäßen Kraftfahrzeugdach ausgestaltetes Kraftfahrzeug vorgeschlagen.

### Bezugszeichenliste

- 1: Vorderes Dachelement
- 3: Hinteres Dachelement
- 5: Drehpunkt
- 7: Schubstange
- 9: Drehpunkt
- 11: Umlenkhebel
- 13: Arm
- 15: Arm
- 17: Drehpunkt
- 19: Verbindungshebel
- 21: Verbindungspunkt
- 23: Verbindungshebel
- 25: Drehverbindung
- 27: Drehverbindung
- 29: Drehverbindung
- 31: Drehverbindung
- 33: Führungshebel
- 35: Drehverbindung

## Patentansprüche

1. Klappvorrichtung für ein Kraftfahrzeugdach, das wenigstens zwei aufklappbare Dachelemente (1, 3) zum Öffnen einer Dachöffnung, wobei das zweite Dachelement (3) in einem ersten Bereich hiervon um einen bezogen auf das Kraftfahrzeugdach ersten ortsfesten Drehpunkt (5) drehbar gelagert ist, aufweist, umfassend
eine Schubstange (7), die im Bereich eines ersten Endes hiervon um einen bezogen auf das Kraftfahrzeugdach zweiten ortsfesten Drehpunkt (9) drehbar lagerbar ist;
einen Umlenkhebel (11), welcher mit einem ersten Bereich hiervon drehbar an einem zweiten Ende der Schubstange (7) befestigt ist, und mit einem zweiten Bereich (17) hiervon drehbar an einem zweiten Bereich des zweiten Dachelements (3) befestigbar ist;
zwei Verbindungshebel (19, 23), welche jeweils mit einem ihrer Enden (25, 27) jeweils drehbar, jedoch ortsfest am ersten Dachelement (1) befestigbar sind; und
einen Führungshebel (33), der mit einem ersten Ende (35) hiervon drehbar am zweiten Dachelement (3) befestigbar ist,
wobei zum Ausstellen des ersten Dachelements (1) bezogen auf das zweite Dachelement (3) während einer Drehung des zweiten Dachelements (3) um dessen dachfesten Drehpunkt (5) der Umlenkhebel (11) oder der Führungshebel (33) zusätzlich drehbar an beiden Verbindungshebeln (19, 23) befestigt ist, und
wobei der andere aus Umlenkhebel (11) und Führungshebel (33) an nur einem der beiden Verbindungshebel (19) und ebenfalls auf drehbare Weise befestigt ist.

2. Kraftfahrzeuge dach, umfassend eine Klappvorrichtung nach Anspruch 1.

3. Kraftfahrzeugdach nach Anspruch 2, das mehr als zwei Dachelemente (1, 3) aufweist, wobei nur eines der Dachelemente (1, 3) um einen bezogen auf das Kraftfahrzeugdach ersten ortsfesten Drehpunkt (5) drehbar gelagert ist, und wobei alle weiteren Dachelemente jeweils um einen bezogen auf ein jeweils vorgelagertes Dachelement ortsfesten Drehpunkt drehbar gelagert sind.

4. Kraftfahrzeug, welches eine Klappvorrichtung nach Anspruch 1 und/oder ein Kraftfahrzeugdach nach einem der Ansprüche 2 oder 3 aufweist.

## Claims

1. Folding device for a motor vehicle roof, which has at least two folding roof elements (1, 3) for opening a roof opening, wherein the second roof element (3) is disposed in a first region thereof to be rotatable around a first rotation point (5) fixed relative to the motor vehicle roof, comprising
a push rod (7), which can be disposed in the region of a first end thereof to be rotatable around a second rotation point (9) fixed relative to the motor vehicle roof;
a shift lever (11), which at a first region thereof is rotatably fastened to a second end of the push rod (7) and at a second region (17) thereof can be rotatably fastened to a second region of the second roof element (3);
two connection levers (19, 23), which respectively can be fastened to be rotatable at one of their respective ends (25, 27), but to be fixed to the first roof element (1); and
a guide lever (33), which at a first end (35) thereof can be rotatably fastened to the second roof element (3),
wherein to extend the first roof element (1) relative to the second roof element (3) during a rotation of the second roof element (3) around its rotation point (5) fixed to the roof, the shift lever (11) or the guide lever (33) is additionally rotatably fastened to both connection levers (19, 23), and
wherein the other one of the shift lever (11) and guide lever (33) is fastened to only one of the two connection levers (19) and likewise in a rotatable manner.

2. Motor vehicle roof comprising a folding device according to claim 1.

3. Motor vehicle roof according to claim 2, which has more than two roof elements (1, 3), wherein only one of the roof elements (1, 3) is disposed to be rotatable around a first rotation point (5) fixed relative to the motor vehicle roof, and wherein all further roof elements are respectively disposed to be rotatable around a rotation point fixed relative to a respective roof element arranged in front.

4. Motor vehicle, which has a folding device according to claim 1 and/or a motor vehicle roof according to one of claims 2 or 3.

## Revendications

1. Dispositif rabattable pour un toit de véhicule automobile, qui présente au moins deux éléments de toit (1, 3) relevables pour ouvrir une ouverture dans le toit, le second élément de toit (3) étant logé dans une première zone de celui-ci à rotation autour d'un premier centre de rotation (5) fixe par rapport au toit de véhicule automobile, comprenant :
une bielle (7) qui est montée à rotation dans la zone d'une première extrémité de celle-ci autour d'un second centre de rotation (9) fixe par rapport au toit de véhicule automobile ;
un levier de renvoi (11) qui est fixé par une première zone de celui-ci à rotation sur une seconde extrémité de la bielle (7), et peut être fixé par une seconde zone (17) de celui-ci à rotation sur une seconde zone du second élément de toit (3) ;
deux leviers de liaison (19, 23) qui peuvent être fixés chacun par l'une de leurs extrémités (25, 27) chacun à rotation mais à une position fixe sur le premier élément de toit (1) ; et
un levier directeur (33) qui peut être fixé par une première extrémité (35) de celui-ci à rotation sur le second élément de toit (3),
pour relever le premier élément de toit (1) par rapport au second élément de toit (3) pendant une rotation de ce dernier autour de son centre de rotation (5) fixé au toit, le levier de renvoi (11) ou le levier directeur (33) étant fixé en outre à rotation sur les deux leviers de liaison (19, 23), et
l'autre parmi le levier de renvoi (11) et le levier directeur (33) étant fixé sur uniquement l'un (19) des deux leviers de liaison et également à rotation.

2. Toit de véhicule automobile, comprenant un dispositif rabattable selon la revendication 1.

3. Toit de véhicule automobile selon la revendication 2 qui présente plus de deux éléments de toit (1, 3), seul l'un des éléments de toit (1, 3) étant logé à rotation autour d'un premier centre de rotation (5) fixe par rapport au toit de véhicule automobile, et tous les autres éléments de toit étant logés à rotation respectivement autour d'un centre de rotation fixe par rapport à un élément de toit monté respectivement en amont.

4. Véhicule automobile qui présente un dispositif rabattable selon la revendication 1 et/ou un toit de véhicule automobile selon l'une des revendications 2 ou 3.
